# EUROPEAN PATENT SPECIFICATION

(11) **EP 2 433 827 B1**
(45) Date of publication and mention of the grant of the patent: **09.01.2013**
(21) Application number: 11182433.0
(22) Date of filing: 23.09.2011
(51) Int. Cl.: B60J 5/04

(54) **Vehicular door**
Fahrzeugtür
Porte véhiculaire

(30) Priority: 24.09.2010 JP 2010213885
(43) Date of publication of application: 28.03.2012
(73) Proprietor: Honda Motor Co., Ltd., Minato-ku Tokyo 107-8556 (JP)
(72) Inventor: Ikezumi, Asato, Saitama, 351-0193 (JP); Nakamura, Hiroshi, Saitama, 351-0193 (JP)
(74) Representative: Trossin, Hans-Jürgen

(56) References cited:
- EP-A2- 1 462 284
- DE-A1- 4 005 316
- JP-U- 63 066 318
- US-A- 5 983 571

## Description

The present invention relates to vehicular doors according to the preamble part of claim 1.

A vehicular door of the generic kind is known from DE 4005316 A1.

Vehicular doors have been known, which include a door body section, a door sash section provided over the door body section, and a door glass vertically movable in and along the door body section and door sash section. The door sash section includes a first sash member constituting an upper frame, a second sash member constituting a rear frame, a cut section formed by recessing a corner portion defined by a rear end portion of the first sash member and an upper end portion of the second sash members, and a garnish member having an outline extending along the cut section in overlapping relation to the respective end portions of the first and second sash members. The first and second sash members are each in the form of a rolled or roll-formed sash (i.e., a sash formed by roll forming). With such vehicular doors, a degree of curving, i.e. curvature, of the corner section between the first and second sash members can be chosen more or less as desired, and thus, an upper rear portion of the door sash section can be formed generally in a more or less desired curved shape. One example of such vehicular doors is disclosed in Japanese Patent Application Laid-Open publication No. 2010-36688 (hereinafter referred to as "the patent literature").

Generally, however, the roll-formed sashes, formed by roll forming, cannot be curved greatly, i.e. to a great degree. Thus, if a seal line to be abutted against a weather strip mounted on a door opening section is curved greatly, then the roll-formed sashes may not be able to be curved, appropriately following the great curve of the seal line. One conceivable approach for appropriately following the great curve of the seal line may be to form the greatly-curved portion of the door sash section as a closed sectional structure composed of two pressed or press-formed panels. However, in a case where a handle bracket is provided on the door sash section and a door handle for opening and closing the door body section is provided on the door bracket, the overall weight and cost would increase due to an increase in the number of the panels.

It is an object of the present invention to provide a vehicular door having a light and simple structure.

In order to accomplish the above-mentioned object, the present invention provides an improved vehicular door according to claim 1 for opening and closing a door opening section provided in a vehicle body, the vehicular door comprising a door body section, a door sash section disposed over the door body section and having a door glass mounted therein, and a handle device for operating a door latch mechanism provided on the door body section. The door sash section includes: a roll-formed sash extending along an upper edge portion of the door opening section in spaced-apart relation to the door body section; and a handle bracket formed by press forming, joined to the roll-formed sash and the door body section and having the handle device mounted thereon.

Namely, the present invention, where the roll-formed sash and the door body section are interconnected by the press-formed handle bracket, can achieve a vehicular door of a design having a greatly-curved seal line. Further, because the door sash section is constructed using the handle bracket having the handle device mounted thereon, the present invention can reduce the overall weight and cost of the vehicular door, as compared to the case where dedicated panels are provided on the door sash section.

The door opening section has a weather strip mounted thereon for abutment against the inner surface, facing the interior of the vehicle, of the roll-formed sash, the handle bracket includes a mounting surface having the handle device mounted thereon, and a seal line setting section drawn (projected) inwardly toward the interior of the vehicle and abutting against the weather strip extending continuously on and along the inner surface of the roll-formed sash and the handle bracket, and the seal line setting section includes a concave portion indented inwardly toward the interior of the vehicle, a hand-inserting portion for a person to hold a door handle of the handle device being provided in the concave portion.

Namely, the same drawing process performed for forming the above-mentioned seal line setting section also forms the concave portion indented from the garnish member mounting surface of the handle bracket inwardly toward the interior of the vehicle. Further, because the hand inserting portion of the door handle is formed in the handle device using the concave portion, the handle bracket can be simplified in construction. Note that, if the concave portion providing the hand inserting portion is provided in another portion than the seal line setting section, then the concave portion and the seal line setting section have to be formed separately, and thus, the handle bracket would undesirably increase in size.

Preferably, in the vehicular door of the present invention, the mounting surface of the handle bracket includes a rear mounting surface and front mounting surfaces having the handle device mounted thereon, the front and rear mounting surfaces being located forwardly and rearwardly of a reference seal line set by the seal line setting section. Mounting the garnish member on the garnish member mounting surfaces, located forwardly and rearwardly of the reference seal line, can eliminate a need for greatly extending the handle bracket in opposite directions from the reference seal line, i.e. forward and rearward of the reference seal line

Preferably, in the vehicular door of the present invention, the handle bracket comprises a first press-formed panel disposed adjacent to the interior of the vehicle and a second press-formed panel disposed adjacent to an exterior of the vehicle, and the first and second press-formed panels together define a closed section. In order to fix the garnish member to the handle bracket, the garnish member has to have fixing portions, such as bosses for screwing therein of bolts etc. The second press-formed panel can be disposed within a space where such fixing portions are provided; thus, it is possible to eliminate a need for increasing the thickness, in the vehicle width direction, of the vehicular door only in order to provide the closed section. Further, because the closed section is defined by the first and second press-formed panels, the strength and rigidity of the door sash section can be increased.

Preferably, in the vehicular door of the present invention, the front end of the second press-formed panel is located rearwardly, in a vehicle front-rear direction, of the front end of the first press-formed panel. Further, the vehicular door of the present invention further comprises a support mechanism that pivotably supports a door handle of the handle device, and a transmission member that transmits movement of the door handle to the latch mechanism, the support mechanism and the transmission member being disposed between the front ends of the first and second press-formed panels. With such arrangements, the present invention can minimize a thickness of sections of the vehicle door at and around the door handle.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will hereinafter be described in detail, by way of example only, with reference to the accompanying drawings, in which:
Fig. 1 is a side view of a vehicle employing a vehicular door according to an embodiment of the present invention;
Fig. 2 is a side view showing sections at and around a door handle of the vehicular door of Fig. 1;
Fig. 3 is a perspective view showing a door sash section in the vehicular door of Fig. 1;
Fig. 4 is a perspective view, taken from outside the vehicle, showing a handle bracket of the door sash section in the vehicular door of Fig. 3;
Fig. 5 is a perspective view, taken from inside the vehicle, showing the handle bracket of the door sash section in the vehicular door of Fig. 3;
Fig. 6 is a sectional view taken along line 6 - 6 of Fig. 2;
Fig. 7 is a sectional view taken along line 7 - 7 of Fig. 2;
Fig. 8 is a side view, taken from inside the vehicle, showing a garnish member of the vehicular door shown in Fig. 2; and
Figs. 9A and 9B are views illustrating differences between a comparative conventional example of a vehicular door and the embodiment of the vehicular door of the present invention.

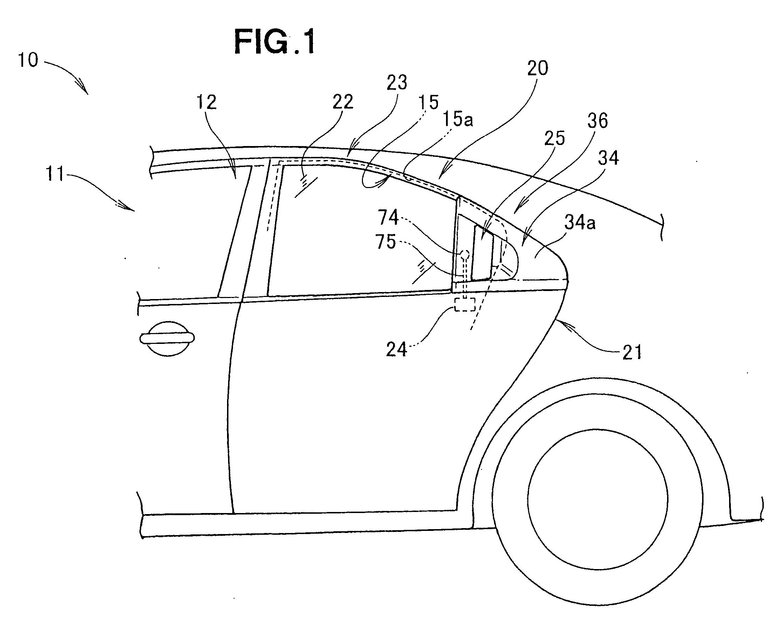

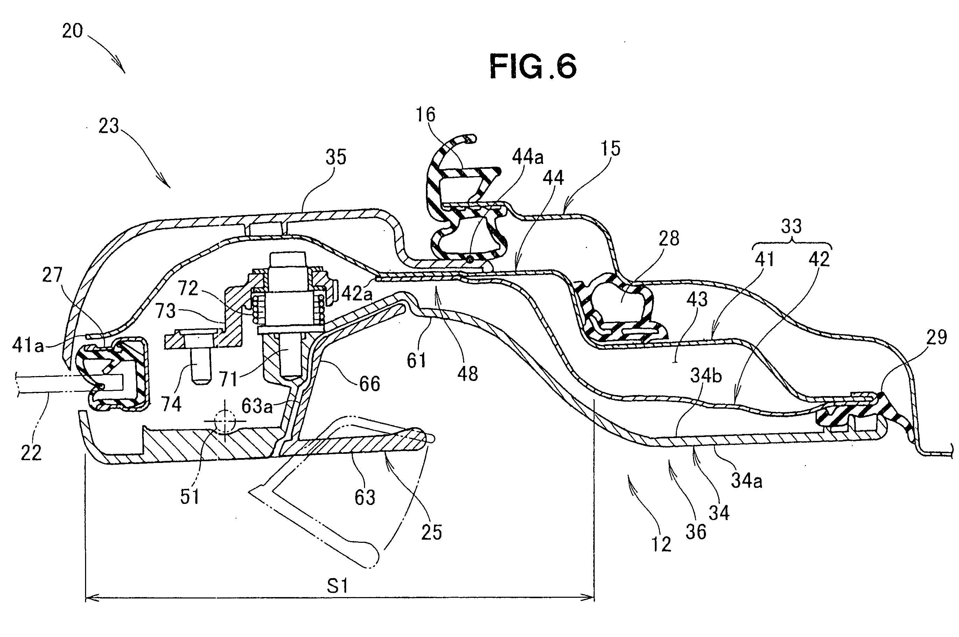

Initial reference is made to Fig. 1 showing in side elevation a vehicle employing a door according to the embodiment of the present invention and, in particular, a rear vehicular door. As shown in Figs. 1 to 3, the vehicle 10 includes a door opening section 15 provided in a side of a vehicle body 11, and the vehicular door 20 mounted to the door opening section 15 for opening and closing the door opening section 15. The door opening section 15 includes a weather strip 16 (Fig. 6) for preventing rainwater from getting to the interior of the vehicle 10, and a striker (not shown) for anchoring the vehicular door 20.

The vehicular door 20 include a door body section 21, a door sash section (or door frame) 23 provided over the door body section 21 and having a door glass 22 mounted therein, and a door handle 25 for operating a door latch mechanism 24 provided on the door body section 21. The latch mechanism 24 includes a member for lockingly engaging the door body section 21 with the striker (not shown) secured to the door opening section 15.

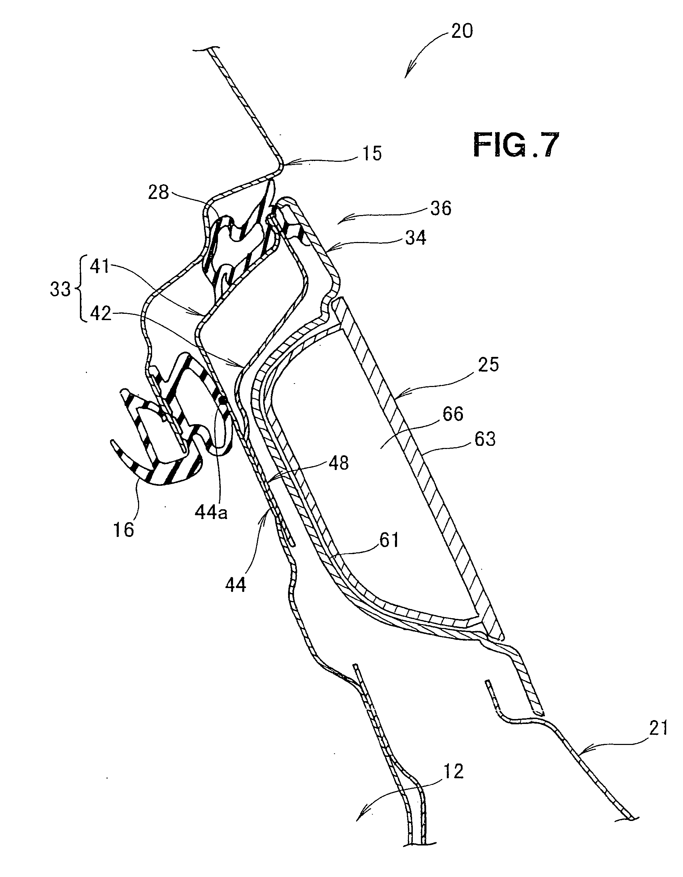

Further, as shown in Figs. 6 and 7, the vehicular door 20 includes a run channel 27 provided in and along both the door body section 21 and the door sash section 23 for vertically slidably supporting the door glass 22, a first door-frame-side weather strip 28 provided on and along both the door body section 21 and the door sash section 23 for preventing rainwater from getting to the interior of the vehicle, and a second door-frame-side weather strip 29 provided on and along both the door body section 21 and the door sash section 23 for preventing rainwater from getting to the interior of the vehicle.

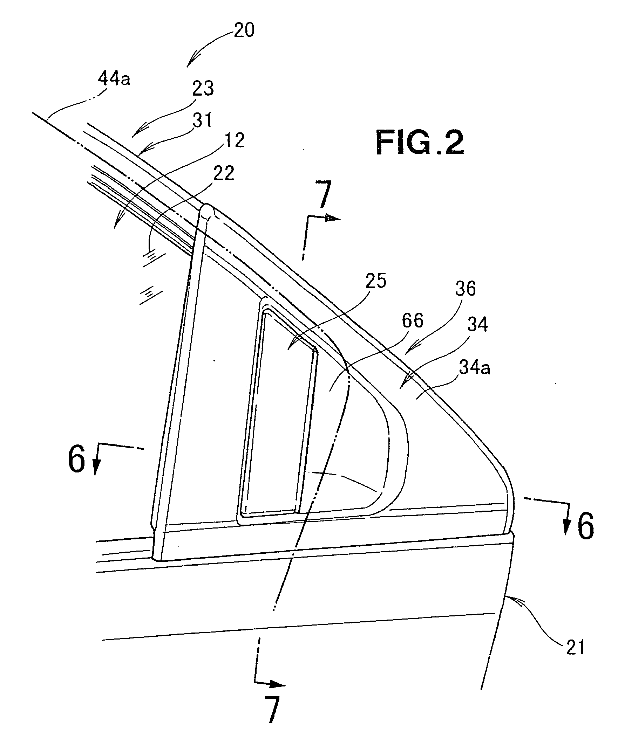

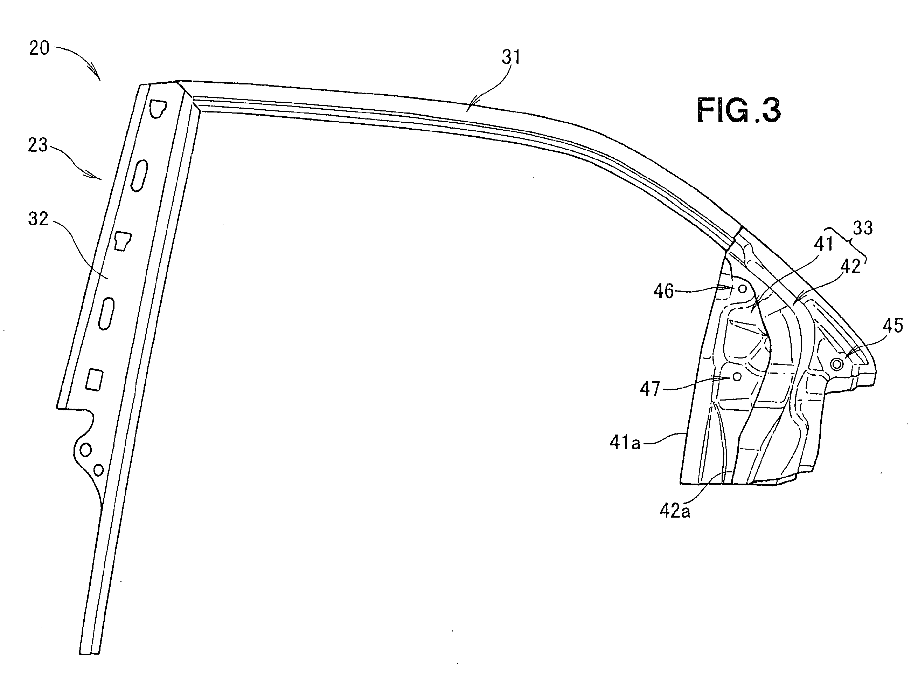

As shown in Figs. 2 and 3, the door sash section (door frame) 23 includes: a roll-formed sash 31 extending along an upper edge portion 15a of the door opening section 15 (Fig. 1); a front frame member 32 fixedly joined to the roll-formed sash 31 and door body section 21 to thereby constitute a front vertical portion of the door sash section 23; a handle bracket 33 fixedly joined to the roll-formed sash 31 and door body section 21 to thereby constitute a rear portion of the door shah section 23; a garnish member 34 mounted to the handle bracket 33 for horizontally pivotably supporting the door handle 25; and a lining 35 for covering the handle bracket 33 from the interior 12 of the vehicle 10 (or passenger compartment).

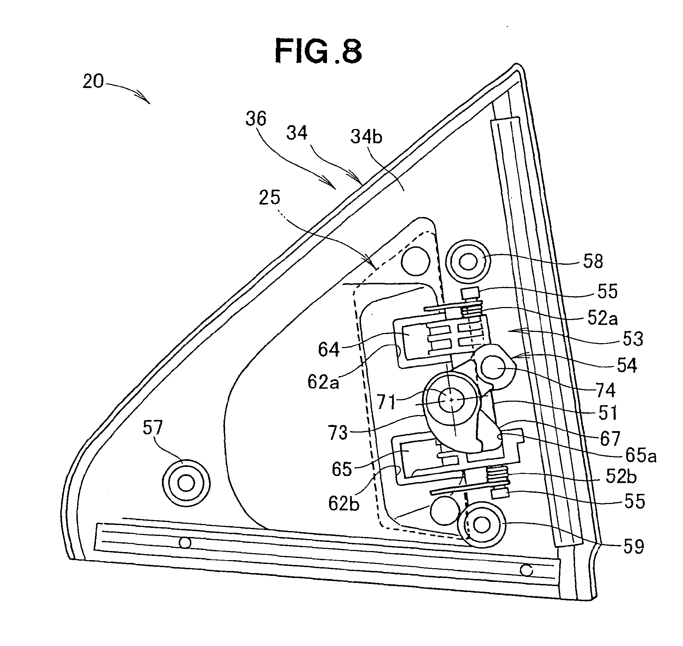

Note that the door handle 25, garnish member 34, including a support mechanism 53 (Fig. 8), a later-described transmission member 54 (Fig. 8) and a rod 75 (Fig. 1) together constitute a handle device 36.

The roll-formed sash 31, formed by roll forming, extends along the upper edge portion 15a of the door opening section 15 in spaced-apart relation to the door body section 21. Further, the roll-formed sash 31 has its inner surface 31a facing the interior 12 of the vehicle 10 (or passenger compartment), and the inner surface 31a abuts against the weather strip 16 when the vehicular door 20 is in a closed position.

As shown in Figs. 3 to 5, the handle bracket 33 includes a first press-formed panel 41 formed by press forming and disposed adjacent to the interior 12 of the vehicle 10, and a second press-formed panel 42 formed by press forming and disposed adjacent to the exterior of the vehicle 10. The first and second press-formed panels 41 and 42 together constitute a closed section 43. Namely, the handle bracket 33 of the door sash section 23 is formed by press forming, and the door handle 25 is mounted on the handle bracket 33 via the garnish member 34.

The first press-formed panel 41 of the handle bracket 33 includes a seal line setting section 44 that sets a reference seal line 44a to be abutted against the weather strip 16 extending continuously on and along the inner surface 31a of the roll-pressed sash 31 and the inner surface of the handle bracket 33. The seal line setting section 44 is drawn from a rear garnish member mounting surface 45, on which the garnish member 34 is mounted, inwardly toward the interior 12 of the vehicle 10. The reference seal line 44a is a continuous line to be abutted against the weather strip 16 extending continuously on and along the inner surface 31a of the roll-pressed sash 31 and the inner surface of the handle bracket 33.

The seal line setting section 44 has a concave portion 48 indented from the rear garnish member mounting surface 45 inwardly toward the interior 12 of the vehicle 10, and reference character S1 in Fig 6 represents a range over which the concave portion 48 extends in a front-rear direction of the vehicle 10.

Further, the handle bracket 33 includes, in front of the seal line setting section 44, upper and lower front garnish member mounting surfaces 46 and 47 on which is mounted the garnish member 34. Namely, the handle bracket 33 includes the garnish member mounting surfaces 45, 46 and 47 disposed on opposite sides (i.e., forwardly and rearwardly) of the reference seal line 44a and having the garnish member 34 mounted thereon

The rear garnish member mounting surface 45 has a small-diameter hole 45a formed therein for passage therethrough of a mounting screw (not shown) to mount the garnish member 34 on the first press-formed panel 41, and a large-diameter hole 45b for passage therethrough of a first mounting boss 57 (Fig. 8) of the garnish member 34 to the second press-formed panel 42. The front garnish member mounting surfaces 46 and 47 each only have a small-diameter hole 46a formed therein for passage therethrough of a mounting screw (not shown) to mount the garnish member 34 to the first press-formed panel 41.

In the handle bracket 33, the second press-formed panel 42 has its front end 42a located rearwardly, in the vehicle front-rear direction, of the front end 41a of the first press-formed panel 41. The support mechanism 53 (Fig. 8) that pivotably supports the door handle 25 (see Fig. 2) on the garnish member 34 and the transmission member 54 (Fig. 8) that transmits movement of the door handle 25 to the latch mechanism 24 (Fig. 1) are disposed between the front end 42a of the second press-formed panel 42 and the front end 41a of the first press-formed panel 41.

Stated differently, the support mechanism 53 and the transmission member 54 are disposed in the concave portion of the seal line setting section 44. The door handle 25 and the transmission member 54 are pivotably supported on the back side or inner surface 34b of the garnish member 34, and the latch mechanism 24 is provided on the door body section 21.

As shown in Figs. 6 to 8, the garnish member 34 is not only a decorative member which covers the handle bracket 33, but also a functional member which includes the support mechanism 53 that pivotably supports the door handle 25 and the transmission member 54 that transmits movement of the door handle 25 to the latch mechanism 24.

More specifically, as best seen in Fig. 8, the support mechanism 53 includes a pivot shaft 51 pivotably supporting the door handle 25, upper and lower support portions 55 supporting the pivot shaft 51 on the inner surface 34b of the garnish member 34, and torsion springs 52a and 52b mounted on the pivot shaft 51 for normally biasing the door handle 25 outwardly in the vehicle width direction.

The transmission member 54 includes a pivot shaft 71 fixed to the garnish member 34, a lever portion 73 normally biased by a torsion spring 72 in a circumferential direction of the pivot shaft 71, an actuating pin 74 mounted in the lever portion 73, and a slide portion 67 slidably contacting an abutting portion 65a of a later-described extension portion 65 provided on the door handle 25. In the illustrated example of Fig. 8, the lever portion 73 is normally biased in a counterclockwise direction about the pivot shaft 71. The actuating pin 74 is connected to the latch mechanism 24 via the rod 75. As the door handle 25 is pivoted outwardly (i.e., toward the back side of the sheet of Fig. 8), the transmission member 54 pivots in a clockwise direction of Fig. 8, so that the latch mechanism 24 is placed in an unlatched position.

As shown in Figs. 6 and 8, the door handle 25 includes a handle body 63 formed in a generally U sectional shape as viewed in a horizontal sectional view, and the upper and lower extensions 64 and 65 extending from the back side 63a of the handle body 63 and pivotably mounted on the pivot shaft 51. The handle body 63 has a handle-side concave portion 66 functioning as a hand inserting portion. The lower extension 65 has the abutting portion 65a (Fig. 8) that is abuttingly slidable along the slide portion 67 of the transmission member 54 to transmit movement of the door handle 25 to the transmission member 54.

Further, the garnish member 34 includes the upper and lower support portions 55 supporting the pivot shaft 51, a mounting portion (not shown) for rotatably mounting the transmission member 54, the first mounting boss 57 mounted to the rear garnish member mounting surface 45 of the handle bracket 33, second and third mounting bosses 58 and 59 mounted to the front garnish member mounting surfaces 46 and 47, respectively, of the handle bracket 33, the hand inserting portion 61 of a concave shape in which a person inserts its hand along the outer surface 34a of the garnish member 34 in order to operate the door handle 25, and upper and lower openings 62a and 62b in which the upper and lower extensions 64 and 65 of the door handle 25 are inserted.

As noted above, the handle device 36 mainly comprises the door handle 25, garnish member 34, transmission member 54 and rod 75.

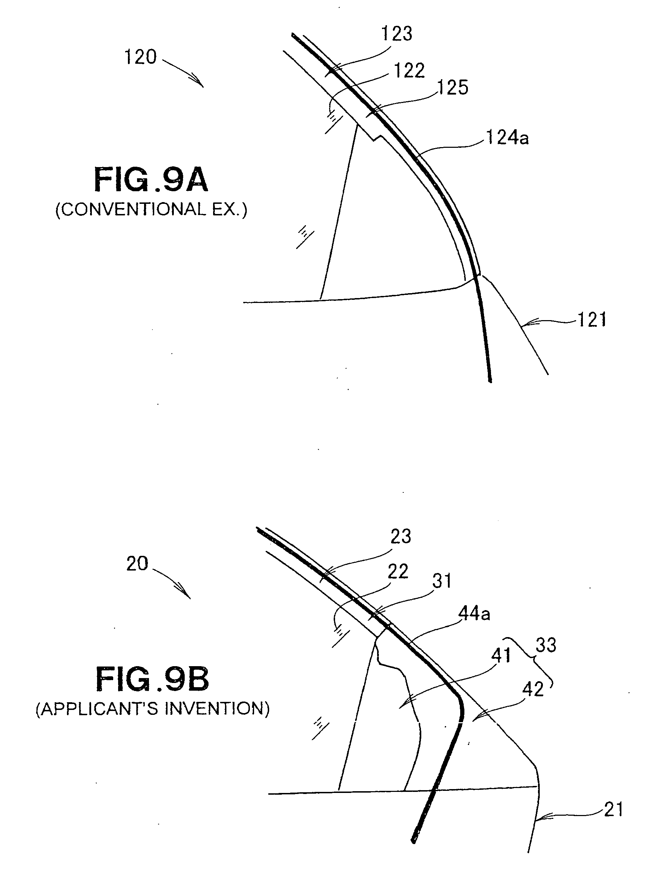

Fig. 9A shows a comparative conventional example of a vehicular door (more specifically, rear vehicular door) 120, which comprises a door body section 121 and a door sash section (door frame) 123 disposed over the door body section 121 and having a door glass 122 mounted therein. In the conventional vehicular door 120, a reference seal line 124a is approximate in shape to a contour or outline of the vehicular door 120, and thus a roll-formed sash 125, defining an upper portion of the door sash section123, can be extended to a rear portion of the door body section 121.

Fig. 9B shows the embodiment of the vehicular door 20 of the present invention, in which the rear portion of the door sash section (door frame) 23 has a greatly-curved shape or design. Thus, the reference seal line 44a to be abutted against the weather strip 16 (Fig. 6) is also curved greatly. However, the roll-formed sash 31, formed by roll forming, cannot be curved greatly, as noted earlier. This is why the handle bracket 33 including the first and second press-formed panels 41 and 42, formed by press forming, is provided in the rear portion of the door sash section (door frame) 23. In this way, the instant embodiment can achieve an enhanced design freedom while allowing the rear portion of the door sash section to secure equal rigidity to the roll-formed sash 31.

As shown in Figs. 1 to 3, the vehicular door 20 opens and closes the door opening section 15 provided in the vehicle body 11, and it includes the handle device 36 (door handle 25) for operating the latch mechanism 24 provided on the door body section 21.

The door sash section (door frame) 23 includes the roll-formed sash 31 extending along the upper edge portion 15a of the door opening section 15 in spaced-apart relation to the vehicle body section 21, and the handle bracket 33 formed by press forming, fixedly joined to the roll-formed sash 31 and door body section 21 and having the handle device 36 (door handle 25) mounted thereon.

Namely, the roll-formed sash 31 and the door body section 21 are interconnected by the press-formed handle bracket 33, and thus, it is possible to achieve a vehicular door 20 of a design having a greatly-curved seal line.

Further, because the door sash section 23 is constructed using the handle bracket 33 having the handle device 36 (door handle 25) mounted thereon, the instant embodiment can reduce the weight and cost of the vehicular door 20, as compared to the case where dedicated panels are provided on the door sash section 23.

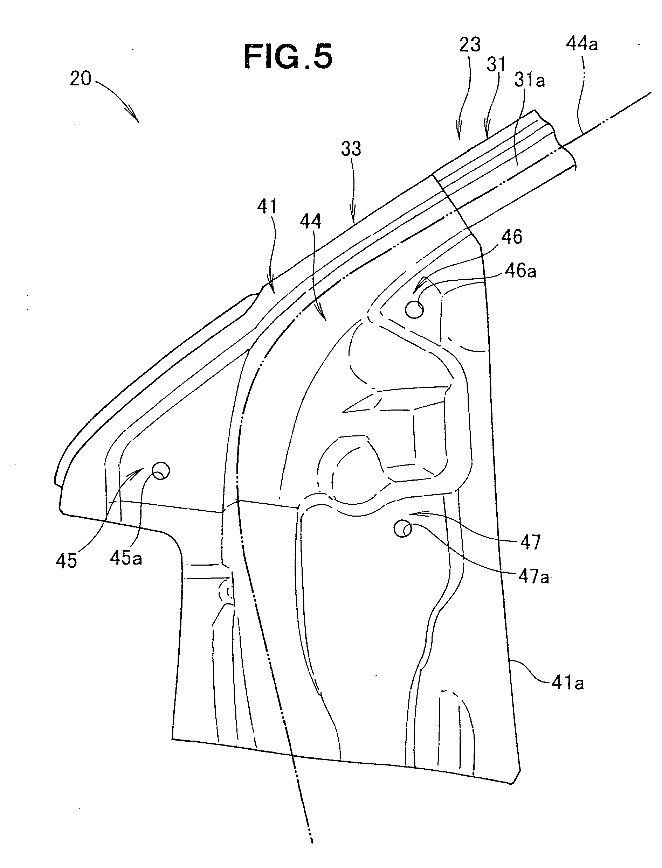

Further, as shown in Figs. 5 and 6, the vehicular door 20 includes the weather strip 16 provided on the door opening section 15 for abutment against the inner surface 31a (facing the interior of the vehicle) of the roll-formed sash 31.

Further, the handle bracket 33 includes the seal line setting section 44 drawn (projected) from the rear garnish member mounting surface 45, on which the garnish member 34 is mounted, inwardly toward the interior of the interior 12 of the vehicle 10, and the seal line setting section 44 abutted against the weather strip 16 extending continuously on and along the inner surface 31a of the roll-formed sash 31 and the handle bracket 33.

Furthermore, the seal line setting section 44 has the concave portion 48 indented from the rear garnish member mounting surface 45 inwardly toward the interior 12 of the vehicle 10, and the hand inserting portion 61 for a person to grasp or hold the door handle 25 of the handle device 36 is formed in the concave portion 48. More specifically, the hand inserting portion 61 of the door handle 25 is formed in the garnish member 34 by the garnish member 34 being formed in an inwardly concavely curved shape along the concave portion 48.

Namely, the same drawing process performed for forming the above-mentioned seal line setting section 44 also forms the concave portion 48 indented from the rear garnish member mounting surface 45 of the handle bracket 33 inwardly toward the interior 12 of the vehicle 10. Because the hand inserting portion 61 of the door handle 25 is formed in the handle device 36 (garnish member 34) using the concave portion 48, the handle bracket 33 can be simplified in construction. Note that, if the concave portion 48 providing the hand inserting portion 61 is provided in another portion than the seal line setting section 44, then the concave portion 48 and the seal line setting section 44 have to be formed separately, and thus, the handle bracket 33 would undesirably increase in size in opposite directions from the reference seal line 44a, i.e. forward and rearward of the reference seal line 44a.

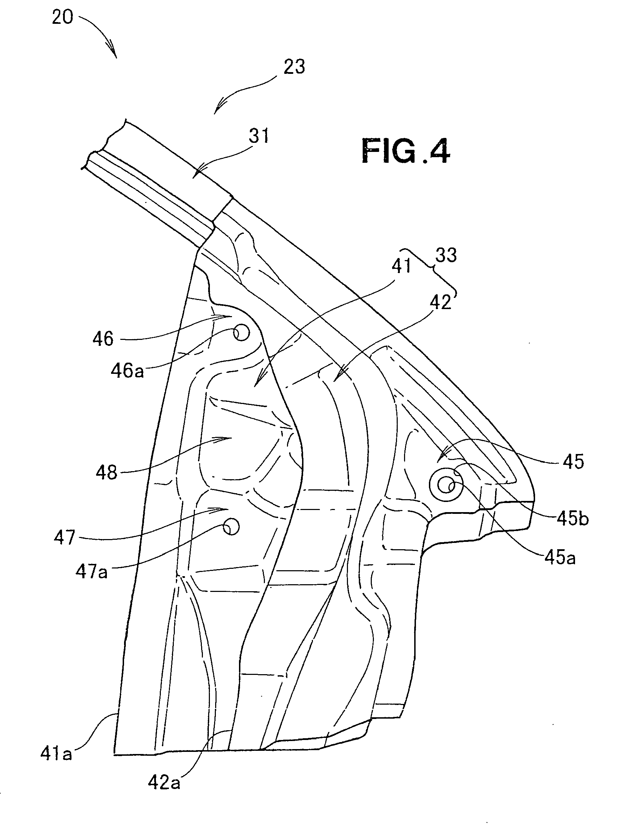

Further, the handle bracket 33 includes the front garnish member mounting surfaces 46 and 47 in front of the seal line setting section 44 so that the front and rear garnish member mounting surfaces 46 and 47 and 45 are located on opposite sides (i.e., forwardly and rearwardly) of the seal line setting section 44, as shown in Fig. 4. Mounting the garnish member 34 on the front and rear garnish member mounting surfaces 46 and 47 and 45 can eliminate a need for greatly extending the handle bracket 33 in the opposite directions from the reference seal line 44a, i.e. forward and rearward of the reference seal line 44a.

Further, in the vehicular door 20, as shown in Fig. 6, the handle bracket 33 has the closed section 43 defined by the first press-formed panel 41 disposed adjacent to the interior 12 of the vehicle 10 and the second press-formed panel 42 disposed adjacent to the exterior of the vehicle 10. The closed section 43 defined by the first and second press-formed panels 41 and 42 can increase the strength and rigidity of the door sash section 23.

In order to fix the garnish member 34 to the handle bracket 33, the garnish member 34 has to have fixing portions, such as bosses for screwing therein of bolts etc. The second press-formed panel 42 can be disposed within a space where such fixing portions are provided; thus, it is possible to eliminate a need for increasing the thickness, in the vehicle width direction, of the vehicular door 20 only in order to provide the closed section 43. Further, because the closed section 43 is defined by the first and second press-formed panels 41 and 42, the strength and rigidity of the door sash section 23 can be increased.

Furthermore, in the vehicular door 20, as seen Figs. 4 and 8, the front end 42a of the second press-formed panel 42 is located rearwardly, in the vehicle front-rear direction, of the front end 41a of the first press-formed panel 41, and the support mechanism 53 that pivotably supports the door handle 25 of the handle device 36 on the garnish member 34 and the transmission member 54 that transmits movement of the door handle 25 to the latch mechanism 24 are disposed between the front end 42a of the second press-formed panel 42 and the front end 41a of the first press-formed panel 41. With such arrangements, the instant embodiment can minimize a thickness, in the vehicle width direction, of sections of the door 20 at and around the door handle 25.

Whereas the instant embodiment of the vehicular door 20 has been described above in relation to the case where the handle bracket 33 includes the first press-formed panel 41 disposed adjacent to the interior 12 of the vehicle 10 and the second press-formed panel 42 disposed adjacent to the exterior of the vehicle 10 as shown in Fig. 4, the present invention is not so limited, and the handle bracket 33 may comprises only one of such press-formed panels.

Further, whereas the instant embodiment of the vehicular door 20 has been described above in relation to the case where the support mechanism 53 includes the pivot shaft 51, torsion springs 52a and 52b and support portions 55 as shown in Fig. 8, the present invention is not so limited, and the support mechanism 53 may include accessories of the door handle 25 in addition to the above-mentioned.

Furthermore, whereas the instant embodiment of the vehicular door 20 has been described above in relation to the case where the transmission member 54 includes the pivot shaft 71, torsion spring 72 and actuating pin 74 as shown in Fig. 6, the present invention is not so limited, and the transmission member 54 may be constructed in another manner as long as it can transmit movement of the door handle 25 to the latch mechanism 24.

The vehicular door of the present invention is well suited for application to vehicles where a door handle for opening and closing the door is provided within a door sash section (door frame).

A vehicular door (20) for opening and closing a door opening section (15) provided in a vehicle body (11) includes a door body section (21), a door sash section (23) provided over the door body section and having a door glass (22) mounted therein, and a handle device (36) for operating a door latch mechanism (24) provided on the door body section. The door sash section (23) includes: a roll-formed sash (31) extending along an upper edge portion (15a) of the door opening section (15) in spaced-apart relation to the door body section; and a press-formed handle bracket (33) joined to the roll-formed sash (31) and the door body section (21) and having the handle device (36) mounted thereon.

## Claims

1. A vehicular door (20) for opening and closing a door opening section (15) provided in a vehicle body (11), the vehicular door comprising a door body section (21), a door sash section (23) disposed over the door body section and having a door glass (22) mounted therein, and a handle device (36) for operating a door latch mechanism (24) provided on the door body section,
the door sash section (23) including: a sash (31) extending along an upper edge portion (15a) of the door opening section (15) in spaced-apart relation to the door body section (21); and a handle bracket (33) formed by press forming, joined to the sash (31) and the door body section (21) and having the handle device (36) mounted thereon, wherein the handle bracket (33) includes a mounting surface (45) having the handle device (36) mounted thereon,
**characterized in that** the sash (31) is a roll-formed sash (31), the door opening section (15) has a weather strip (16) mounted thereon for abutment against an inner surface (31 a), facing an interior (12) of the vehicle, of the roll-formed sash (31),
the handle bracket (33) includes a seal line setting section (44) drawn from the mounting surface (45) toward the interior (12) of the vehicle and abutting against the weather strip (16) extending continuously on and along the inner surface (31 a) of the roll-formed sash (31) and the handle bracket (33), and
the seal line setting section (44) includes a concave portion (48) indented toward the interior (12) of the vehicle, a hand-inserting portion (61) for a person to hold a door handle (25) of the handle device being provided in the concave portion (48).

2. The vehicular door according to claim1,
wherein the mounting surface (45, 46, 47) of the handle bracket (38) includes a rear mounting surface (45) and front mounting surfaces (46, 47) having the handle device (36) mounted thereon, the front and rear mounting surfaces (46, 47, 45) being located forwardly and rearwardly of a reference seal line (44a) set by the seal line setting section (44).

3. The vehicular door according to any one of claims 1 to 2,
wherein the handle bracket (33) comprises a first press-formed panel (41) disposed adjacent to the interior (12) of the vehicle and a second press-formed panel (42) disposed adjacent to an exterior of the vehicle, and the first and second press-formed panels (41, 42) together define a closed section (43).

4. The vehicular door according to any one of claims 1 to 3,
wherein a front end (42a) of the second press-formed panel (42) is located rearwardly, in a vehicle front-rear direction, of a front end (41a) of the first press-formed panel (41), and
which further comprises a support mechanism (53) that pivotably supports a door handle (25) of the handle device (36), and a transmission member (54) that transmits movement of the door handle to the latch mechanism, the support mechanism (53) and the transmission member (54) being disposed between the front ends (41a, 42a) of the first and second press-formed panels (41, 42).

## Patentansprüche

1. Fahrzeugtür (20) zum Öffnen und Schließen eines in einer Fahrzeugkarosserie (11) bereitgestellten Türöffnungsabschnitts (15), wobei die Fahrzeugtür umfasst: einen Türkörperabschnitt (21), einen Türfensterrahmenabschnitt (23), welcher über dem Türkörperabschnitt angeordnet ist und eine darin montierte Türscheibe (22) aufweist, und eine Griffvorrichtung (36) zum Betätigen eines an dem Türkörperabschnitt bereitgestellten Türverriegelungsmechanismus (24),
wobei der Türfensterrahmenabschnitt (23) umfasst: einen Fensterrahmen (31), welcher sich entlang einem oberen Randabschnitt (15a) des Türöffnungsabschnitts (15) in einer beabstandeten Beziehung zu dem Türkörperabschnitt (21) erstreckt; und eine durch Pressformen gebildete Griffhalterung (33), welche mit dem Fensterrahmen (31) und dem Türkörperabschnitt (21) verbunden ist und die Griffvorrichtung (36) daran montiert aufweist, wobei die Griffhalterung (33) eine Montagefläche (45) umfasst, welche die Griffvorrichtung (36) daran montiert aufweist, **dadurch gekennzeichnet, dass** der Fensterrahmen (31) ein durch Rollformen gebildeter Fensterrahmen (31) ist, dass der Türöffnungsabschnitt (15) einen Dichtungsstreifen (16) aufweist, welcher daran montiert ist, um mit einer zu einem Innenraum (12) des Fahrzeugs weisenden Innenfläche (31a) des durch Rollformen gebildeten Fensterrahmens (31) in Anlage zu treten,
die Griffhalterung (33) einen Dichtungslinienfestlegungsabschnitt (44) umfasst, welcher von der Montagefläche (45) in Richtung zum Innenraum (12) des Fahrzeugs gezogen ist und mit dem Dichtungsstreifen (16) in Anlage steht, welcher sich durchgehend an und entlang der Innenfläche (31a) des durch Rollformen gebildeten Fensterrahmens (31) und der Griffhalterung (33) erstreckt, und
der Dichtungslinienfestlegungsabschnitt (44) einen konkaven Abschnitt (48) umfasst, welcher zum Innenraum (12) des Fahrzeugs hin eingerückt ist, wobei ein Handeingriffsabschnitt (61) für eine Person zum Halten eines Türgriffs (25) der Griffvorrichtung in dem konkaven Abschnitt (48) bereitgestellt ist.

2. Fahrzeugtür nach Anspruch 1,
wobei die Montagefläche (45, 46, 47) der Griffhalterung (38) eine hintere Montagefläche (45) und vordere Montageflächen (46, 47) umfasst, welche die Griffvorrichtung (36) daran montiert aufweisen, wobei die vorderen Montageflächen und die hintere Montagefläche (46, 47, 45) vorwärts und rückwärts einer durch den Dichtungslinienfestlegungsabschnitt (44) festgelegten Referenzdichtungslinie (44a) angeordnet sind.

3. Fahrzeugtür nach einem der Ansprüche 1 bis 2,
wobei die Griffhalterung (33) eine erste durch Pressformen gebildete Platte (41), welche dem Innenraum (12) des Fahrzeugs benachbart angeordnet ist, und eine zweite durch Pressformen gebildete, einer Fahrzeugaußenseite benachbart angeordnete Platte (42) umfasst, und wobei die erste und die zweite durch Pressformen gebildete Platte (41, 42) zusammen einen geschlossenen Abschnitt (43) definieren.

4. Fahrzeugtür nach einem der Ansprüche 1 bis 3,
wobei sich ein vorderes Ende (42a) der zweiten durch Pressformen gebildeten Platte (42) in einer Fahrzeuglängsrichtung hinter einem vorderen Ende (41a) der ersten durch Pressformen gebildeten Platte (41) befindet, und
welche ferner einen Tragemechanismus (53), welcher einen Türgriff (25) der Griffvorrichtung (36) in einer drehbaren Weise trägt, und ein Übertragungselement (54) umfasst, welches eine Bewegung des Türgriffs zu einem Verriegelungsmechanismus überträgt, wobei der Tragemechanismus (53) und das Übertragungselement (54) zwischen den vorderen Enden (41 a, 42a) der ersten und der zweiten durch Pressformen gebildeten Platten (41, 42) angeordnet sind.

## Revendications

1. Portière de véhicule (20) pour ouvrir et fermer une section d'ouverture de portière (15) prévue dans une carrosserie de véhicule (11), la portière de véhicule comprenant une section de carrosserie de portière (21), une section de cadre de portière (23) disposée sur la section de carrosserie de portière et ayant une vitre de portière (22) montée à l'intérieur de cette dernière, et un dispositif de poignée (36) pour actionner un mécanisme de verrou de portière (24) prévu sur la section de carrosserie de portière,
la section de cadre de portière (23) comprenant : un cadre (31) s'étendant le long d'une partie de bord supérieure (15a) de la section d'ouverture de portière (15) en relation espacée par rapport à la section de carrosserie de portière (21) ; et un support de poignée (33) formé par formage à la presse, assemblé au cadre (31) et à la section de carrosserie de portière (21) et ayant le dispositif de poignée (36) monté sur ce dernier, dans lequel le support de poignée (33) comprend une surface de montage (45) ayant le dispositif de poignée (36) monté sur cette dernière,
**caractérisée en ce que** le cadre (31) est un cadre formé par laminage (31), la section d'ouverture de portière (15) a un caoutchouc d'étanchéité (16) monté sur cette dernière pour venir en butée contre une surface interne (31a), faisant face à un intérieur (12) du véhicule, du cadre formé par laminage (31),
le support de poignée (33) comprend une section d'ajustage de ligne de joint d'étanchéité (44) tirée de la section de montage (45) vers l'intérieur (12) du véhicule et venant en butée contre le caoutchouc d'étanchéité (16) s'étendant de manière continue sur et le long de la surface interne (31a) du cadre formé par laminage (31) et du support de poignée (33), et
la section d'ajustage de ligne de joint d'étanchéité (44) comprend une partie concave (48) dentelée vers un intérieur (12) du véhicule, une partie d'insertion de main (61) pour qu'une personne tienne une poignée (25) de portière du dispositif de poignée qui est prévu dans la partie concave (48).

2. Portière de véhicule selon la revendication 1,
dans laquelle la surface de montage (45, 46, 47) du support de poignée (38) comprend une surface de montage arrière (45) et des surfaces de montage avant (46, 47) ayant le dispositif de poignée (36) monté sur ces dernières, les surfaces de montage avant et arrière (46, 47, 45) étant positionnées vers l'avant et vers l'arrière sur une ligne de joint d'étanchéité de référence (44a) ajustée par la section d'ajustage de ligne de joint d'étanchéité (44).

3. Portière de véhicule selon l'une des revendications 1 à 2,
dans laquelle le support de poignée (33) comprend un premier panneau formé à la presse (41) disposé de manière adjacente à l'intérieur (12) du véhicule et un second panneau formé à la presse (42) disposé de manière adjacente à un extérieur du véhicule et les premier et second panneaux formés à la presse (41, 42) définissent ensemble une section fermée (43).

4. Portière de véhicule selon l'une quelconque des revendications 1 à 3,
dans laquelle une extrémité avant (42a) du second panneau formé à la presse (42) est positionnée vers l'arrière, dans une direction avant-arrière du véhicule, d'une extrémité avant (41a) du premier panneau formé à la presse (41), et
qui comprend en outre un mécanisme de support (53) qui supporte de manière pivotante une poignée de portière (25) du dispositif de poignée (36) et un élément de transmission (54) qui transmet le mouvement de la poignée de portière au mécanisme de verrou, le mécanisme de support (53) et l'élément de transmission (54) étant disposés entre les extrémités avant (41a, 42a) des premier et second panneaux formés à la presse (41, 42).
